# EUROPÄISCHE PATENTSCHRIFT

(11) **EP 3 493 650 B1**
(45) Veröffentlichungstag und Bekanntmachung des Hinweises auf die Patenterteilung: **06.04.2022**
(21) Anmeldenummer: 18207940.0
(22) Anmeldetag: 23.11.2018
(51) Int. Cl.: H05B 3/50, H05B 3/12, B60H 1/22, F24H 3/04, F24H 9/18

(54) **ELEKTRISCHE HEIZVORRICHTUNG**
ELECTRIC HEATING DEVICE
DISPOSITIF DE CHAUFFAGE ÉLECTRIQUE

(30) Priorität: 30.11.2017 DE 102017221490
(43) Veröffentlichungstag der Anmeldung: 05.06.2019
(73) Patentinhaber: Eberspächer catem GmbH & Co. KG, 76863 Herxheim (DE)
(72) Erfinder: Gschwind, Thomas, 67098 Bad Dürkheim (DE)
(74) Vertreter: Grünecker Patent- und Rechtsanwälte PartG mbB

(56) Entgegenhaltungen:
- CN-Y- 2 917 152
- DE-A1-102012 025 445
- US-A1- 2010 012 641
- US-A1- 2012 061 366
- US-A1- 2017 303 343

## Beschreibung

Die vorliegende Erfindung betrifft eine elektrische Heizvorrichtung mit einem Rahmen, in dem ein Leistungsteil aufgenommen ist. Das Leistungsteil hat zumindest ein wärmeerzeugendes Element und ein als Wellrippenelement ausgebildetes wärmeabgebendes Element. Das Wellrippenelement liegt bei der erfindungsgemäßen Lösung üblicherweise mit guter Wärmeleitfähigkeit an dem wärmeerzeugenden Element an. Das wärmeerzeugende Element hat ein Flachrohr, in dem zumindest ein PTC-Element angeordnet ist. Das PTC-Element befindet sich zwischen zwei Kontaktblechen, die mit unterschiedlicher Polarität bestromt werden und demnach unterschiedlichen Polaritäten zugeordnet sind, um das PTC-Element zu erwärmen. Zwischen der Innenumfangsfläche des Flachrohres und den Kontaktblechen ist eine Isolierung vorgesehen. Diese befindet sich außenseitig zu dem PTC-Element. Üblicherweise liegt die Isolierung mit ihrer dem Flachrohr gegenüberliegenden Fläche unmittelbar an den Kontaktblechen an. So ist das Flachrohr von den Kontaktblechen elektrisch isoliert. Eine solche Ausgestaltung ist vorteilhaft insbesondere bei der Bestromung der PTC-Elemente mit hohen Spannungen. Denn die vorliegende Erfindung betrifft insbesondere eine elektrische Heizvorrichtung für ein Kraftfahrzeug, speziell für ein elektrisch betriebenes Kraftfahrzeug.

Eine elektrische Heizvorrichtung mit den oberbegrifflichen Merkmalen von Anspruch 1 ist beispielsweise aus WO 2007/049746 A1 bekannt. Bei diesem Stand der Technik ist in dem Flachrohr ein Federelement vorgesehen, welches die Kontaktbleche mit Spannung gegen das PTC-Element anlegen soll. An der Außenseite der Kontaktbleche sind - wie es auch bei der erfindungsgemäßen Lösung möglich ist - separate Isolierstreifen als Isolierung vorgesehen, um die Kontaktbleche nach außen zu isolieren. Eine Isolierlage liegt unmittelbar an einer Innenumfangsfläche des Flachrohres an, die andere, an der gegenüberliegenden Seite vorgesehene Isolierlage liegt gegen das Federelement an, welches sich elastisch gegen die Innenumfangsfläche des Flachrohres abstützt.

Jedenfalls auf Seiten des Federelementes hat die vorbekannte Lösung einen schlechten Wärmeaustrag. Das Federelement verhindert eine vollflächige Anlage zwischen der elektrischen Isolierung und der Innenumfangsfläche des Flachrohres. Im Übrigen hat Federstahl eine relativ schlechte Wärmeleitfähigkeit.

US 2012/061366 A1 offenbart auch eine elektrische Heizvorrichtung laut des Oberbegriffes von Anspruch 1.

Für einen effektiven Betrieb einer elektrischen Heizvorrichtung mit zumindest einem PTC-Element ist allerdings ein gleichmäßiger beidseitiger Wärmeaustrag essentiell. Ist das PTC-Element nur schlecht wärmemäßig mit den Wellrippenelementen gekoppelt, so kann die von dem PTC-Element erzeugte Wärme nicht abgeführt werden, der Widerstand des PTC-Elementes wird unendlich groß, sodass eine weitere Aufnahme von elektrischer Energie und damit Leistungsabgabe verhindert wird. Mithin ist der Wirkungsgrad und die Ausnutzung der Leistungsfähigkeit des PTC-Elementes schlecht.

Bei Hochvolt-Anwendungen bestehen ferner besondere Anforderungen an die Sicherheit. Insbesondere bei elektrischen Heizvorrichtungen an Kraftfahrzeugen muss sichergestellt werden, dass die Isolierung um das PTC-Element die außerhalb der Isolierung befindlichen und üblicherweise aus Metall ausgebildeten Teile der elektrischen Heizvorrichtung zuverlässig von den elektrisch bestromten Teilen innerhalb des Flachrohres isoliert.

Der vorliegenden Erfindung liegt das Problem zugrunde, eine elektrische Heizvorrichtung insbesondere für ein Kraftfahrzeug anzugeben, welche bei gutem Wirkungsgrad in verbesserter Weise den Sicherheitsanforderungen gerecht wird.

Zur Lösung dieser Aufgabe wird mit der vorliegenden Erfindung eine elektrische Heizvorrichtung mit den Merkmalen von Anspruch 1 angegeben. Bei dieser erfindungsgemäßen Lösung sind mehrere Flachrohre an ihrer Anschlussseite abgedichtet durch ein Steuergehäuse hindurchgeführt. Die Anschlussrohre können entweder für sich jeweils abgedichtet sein, indem ein Abschlussstopfen in die Rohre eingesetzt wird, sodass lediglich die elektrischen Anschlusselemente zum elektrischen Anschluss der PTC-Elemente an eine Stromquelle die Heizrohre überragen. Alternativ oder zusätzlich können die Flachrohre durch eine außenumfänglich an den Flachrohren angreifende Dichtung abgedichtet sein, welche zwischen der Außenumfangsfläche des Flachrohres und einer Dichtungsaufnahme vorgesehen ist, die durch ein Steuergehäuse ausgebildet wird. Die Flachrohre enden dabei vorzugsweise in dem Steuergehäuse. Das Steuergehäuse bildet einen Steuerteil zu dem Leistungsteil aus und hat üblicherweise eine Steuervorrichtung zur Ansteuerung der Elemente des Leistungsteils. Diese Steuervorrichtung hat üblicherweise Leistungstransistoren zum Steuern des Leistungsstroms. Die Verlustleistung der Leistungstransistoren wird über Kühlelemente abgegeben, die üblicherweise bis in den Leistungsteil hinein ragen oder aber benachbart hierzu enden, jedenfalls aber von dem zu erwärmenden Medium überstrichen werden. Das zu erwärmende Medium für die erfindungsgemäße Heizvorrichtung ist bevorzugt Luft.

So ist der Rahmen der erfindungsgemäßen Lösung bevorzugt auch ein Kunststoffrahmen, der den Leistungsteil umfänglich umschließt. Üblicherweise überragen lediglich Kontaktzungen der Flachrohre zum elektrischen Anschluss derselben an die Steuervorrichtung den Kunststoffrahmen.

Bei der erfindungsgemäßen Lehre sind üblicherweise die Wellrippenelemente metallisch mit der Außenumfangsfläche der Flachrohre kontaktiert. Entsprechendes gilt für eventuell zwischen benachbarten Wellrippenelementen vorgesehenen Streifenelemente aus Metallblech, welche ebene Anstoßflächen für die einzelnen Rippen der Wellrippenelemente ausbilden. Diese metallischen Teile des Leistungsteils liegen erfindungsgemäß auf einem Potential, wozu vorgeschlagen wird, dass an, bevorzugt in dem Steuergehäuse ein Leiterelement vorgesehen ist, welches mehrere Flachrohre elektrisch miteinander verbindet. Durch dieses Leiterelement an dem Steuergehäuse wird sichergestellt, dass eine Mehrzahl von Flachrohren unmittelbar elektrisch miteinander gekoppelt sind und damit auf gleicher Polarität liegen. Hierdurch wird zwangsläufig sichergestellt, dass die Flachrohre und die metallisch daran anliegenden Wellrippenelemente auf gleicher Polarität liegen.

Die erfindungsgemäße elektrische Heizvorrichtung kann mehrere Leiterelemente aufweisen, die mehrere Flachrohre elektrisch miteinander verbindet. Dabei liegen die jeweiligen Leiterelemente unmittelbar elektrisch leitend gegen die zugeordneten Flachrohre an. Dem Ziel einer identischen Polarität für sämtliche Flachrohre und für sämtliche daran anliegende Wellrippenelemente wird dadurch entsprochen, dass die unterschiedlichen Leiterelemente für sich elektrisch miteinander verbunden sind. Dies kann über eine in dem Steuergehäuse vorgesehene Leiterplatte erfolgen, die Steuersignale beispielsweise zu den Leistungstransistoren leitet und/oder den Leistungsstrom von den Leistungstransistoren zu den einzelnen PTC-Elementen führt.

Mit Blick auf einen guten Wärmeaustrag sind die wärmeerzeugenden Elemente unter Vorspannung einer elastischen Feder an dem Flachrohr angelegt. Das Flachrohr wird dabei durch eine äußere Feder verformt, üblicherweise elastisch verformt. Diese äußere Feder ist innerhalb des Rahmens aufgenommen, der bevorzugt ein Kunststoffrahmen ist. Dabei kann die äußere Feder bevorzugt nahe eines Seitenholms oder in den Seitenholmen integriert sein, sodass die durch den Rahmen aufgespannte Innenfläche bestmöglich durch wärmeerzeugende Elemente und die Wellrippenelemente ausgenutzt werden kann. Die äußere Feder drückt die Innenumfangsfläche der Flachrohre unter Zwischenlage der Isolierung gegen die wärmeerzeugenden Elemente. Hierdurch wird eine gute Wärmeauskopplung aus dem wärmeerzeugenden Element erreicht. Darüber hinaus wird die äußere Feder, üblicherweise auch die an dem zugeordneten Flachrohr anliegenden Wellrippenelemente unter Federvorspannung gegen die Flachrohre angelegt, sodass auch an der Außenfläche der Flachrohre ein guter Wärmeübergang zwischen den Flachrohren und den Wellrippenelementen gewährleistet ist.

Der zuvor beschriebene Aspekt kann auch erfindungswesentlich sein. Mit anderen Worten kann ein erfindungsgemäßer Gegenstand durch die oberbegrifflichen Merkmale von Anspruch 1 mit der Maßgabe gebildet werden, dass der Rahmen ein Kunststoffrahmen ist und die wärmeerzeugende Elemente unter Federvorspannung einer äußeren Feder an dem Flachrohr anliegen. Für diese Ausgestaltung sind die kennzeichnenden Merkmale von Anspruch 1 nicht erforderlich aber bevorzugt verwirklicht.

Gemäß einer bevorzugten Weiterbildung der vorliegenden Erfindung sind mehrere Flachrohre über eine gemeinsame, an dem Außenumfang der Flachrohre unter Vorspannung anliegende Kontaktfeder elektrisch miteinander verbunden. Diese Kontaktfeder ist bevorzugt isoliert in dem Steuergehäuse gehalten. Das Steuergehäuse wird dabei bevorzugt ganz oder teilweise aus Kunststoff ausgebildet. Aus Kunststoff sollte jedenfalls ein Steuergehäuseboden ausgebildet sein, der Durchführöffnungen für das Hindurchführen der einzelnen Flachrohre ausbildet. Dieser aus Kunststoff gebildete Steuergehäuseboden kann über einen im Grunde ebenen Steuergehäusedeckel aus einem Blech abgedeckt sein, um die Steuerelemente und gegebenenfalls eine Leiterplatte in dem Steuergehäuse einzusiegeln.

Die eine oder mehrere Kontaktfeder kann an einen Massewächter oder dergleichen innerhalb der Steuervorrichtung angeschlossen sein, um eventuelle Defekte der Isolierung zu detektieren, sodass die elektrische Heizvorrichtung abgeschaltet wird, bevor ein Schaden entstehen kann, wie dies beispielsweise aus EP 2 299 201 A1 der vorliegenden Anmelderin bekannt ist. Die Kontaktfeder kann beispielsweise elektrisch leitend in dem Steuergehäuse oder einem Teil davon aus Metall aufgenommen sein, welches wiederum elektrisch leitend mit einem Massewächter und/oder mit einem Massebolzen zum Anschluss der elektrischen Heizvorrichtung an den Massepol eines Kraftfahrzeuges verbunden ist. Das Leiterelement kann aber ebenso gut mit einem Kunststoffgehäuse aufgenommen und elektrisch mit Leiterbahnen der bestückten oder einer gesondert hierzu lediglich für den Masseanschluss vorgesehenen Leiterplatte verbunden sein, die ihrerseits beispielsweise einen Massewächter trägt und eine Logik zur Auswertung von Signalen des Massewächters aufweisen kann.

Gemäß einer bevorzugten Weiterbildung der vorliegenden Erfindung ist die Kontaktfeder durch ein längliches, üblicherweise U- oder V-förmig umbogenes Blechstück gebildet, das in eine Aufnahmenut des Steuergehäuses eingesetzt ist und zumindest ein mit dem Steuergehäuse zur Festlegung der Kontaktfeder zusammenwirkendes Verriegelungssegment und davon durch Schlitze getrennte Kontaktarme ausbildet, die außenumfänglich gegen die Flachrohre anliegen. Dabei liegt üblicherweise ein Verriegelungselement gegen ein Flachrohr an. Die Anlage gegen das Flachrohr erfolgt üblicherweise am Außenumfang des Flachrohres und zwar an einer Fläche, die sich im Wesentlichen rechtwinklig zu der Hauptseitenfläche des Flachrohres erstreckt, an welcher die Wärmeauskopplung an das Wellrippenelement erfolgt. Der kleinere Flächenabschnitt des Flachrohres in Umfangsrichtung wird nachstehend als "Stirnseite" des Flachrohres bezeichnet.

Gemäß einer weiteren bevorzugten Ausgestaltung der vorliegenden Erfindung ist eine Anschlusskappe an der Anschlussseite in das Flachrohr eingesetzt. Diese Anschlusskappe bildet Aufnahmen zum Herausleiten von Kontaktzungen aus, die bevorzugt aus den Kontaktblechen freigeschnitten sind, jedenfalls aber elektrisch leitend mit den Kontaktblechen verbunden sind. Diese Kontaktzungen überragen die Anschlusskappe für den elektrischen Anschluss der beiden Kontaktbleche innerhalb des Flachrohres. Die Anschlusskappe bildet ferner einen äußeren Trennsteg aus, der zwischen den beiden Kontaktzungen vorgesehen ist und dementsprechend die Luft- und Kriechstrecke zwischen beiden Kontaktzungen erhöht. Die Anschlusskappe hat üblicherweise einen Anlagekragen, der endseitig gegen das Flachrohr anliegt und durch den die axiale Endlage der Anschlusskappe relativ zu dem Flachrohr vorgegeben ist.

Die Anschlusskappe bildet bevorzugt auch einen inneren Trennsteg aus, der in das Flachrohr eingesetzt ist und mitunter bis zu dem benachbart zu der freien Öffnung des Flachrohres angeordneten PTC-Element reicht. So kann dieses PTC-Element durch den inneren Steg von der freien Öffnung des Flachrohres auf Abstand gehalten wird. Der innere Steg trennt dann vorzugsweise auch im Bereich der Mündung des Flachrohres die beiden Kontaktbleche voneinander, sodass auch hier Luft- und Kriechstrecke erhöht sind.

Gemäß einer bevorzugten Weiterbildung der vorliegenden Erfindung kann die Anschlusskappe abgedichtet in das Flachrohr eingesetzt sein. Hierdurch wird verhindert, dass gegebenenfalls durch das Steuergehäuse Verschmutzung oder Feuchtigkeit von der freien Öffnung in das Flachrohr gelangt. Die Abdichtung kann beispielsweise durch einen Kleber erfolgen, der die Anschlusskappe mit dem Flachrohr verbindet.

Der zuvor diskutierte äußere Trennsteg kann ferner die Funktion haben, die Kontaktzungen relativ zu einer Leiterplatte zu positionieren. Hierzu überragt der Trennsteg die zugeordneten Kontaktzungen des entsprechenden Flachrohres. Das freie Ende des äußeren Trennsteges ist bevorzugt konisch zulaufend ausgebildet. Eine für den Anschluss des Flachrohres vorgesehene Leiterplatte hat den Kontaktzungen zugeordnete Kontaktzungenausnehmungen. In diesen Kontaktzungenausnehmungen sind die Kontaktzungen mit den Leiterbahnen der Leiterplatte elektrisch kontaktiert. Der äußere Trennsteg ist bevorzugt konisch zulaufend ausgebildet. Da dieser die Kontaktzungen überragt, muss zunächst der äußere Trennsteg in eine ihm zugeordnete Trennstegausnehmung innerhalb der Leiterplatte in diese eingebracht werden, wodurch eine Positionierung der Kontaktzungen relativ zu den Kontaktzungenausnehmungen bewirkt wird. Die konische Ausgestaltung des freien Endes des äußeren Trennsteges erleichtert dieses Positionieren. Im gefügten Zustand durchragt der äußere Trennsteg die Trennstegausnehmung und ist in diesem mit geringem Spiel eher nach Art einer Passung gehalten, sodass die Kontaktzungen innerhalb der Kontaktzungenausnehmungen mit hoher Genauigkeit positioniert sind. Die Positionierung der Kontaktzungen relativ zu der Leiterplatte erfolgt mithin mittels Formschluss zwischen dem äußeren Trennsteg und der Leiterplatte.

Die zuvor erwähnte Leiterplatte kann eine herkömmliche Leiterplatte sein. Sie kann aber auch durch mehrere Leiterbahnen gebildet sein, die aus einem einheitlichen Blechmaterial durch Stanzen und Biegen herausgearbeitet wurden, wie dies EP 2 505 931 A1 beschreibt. Die Leiterplatte muss nicht notwendigerweise mit elektrischen oder elektronischen Bauteilen bestückt sein.

Gemäß einer bevorzugten Weiterbildung der vorliegenden Erfindung ist an der Außenumfangsfläche des Flachrohres ein Dichtelement angeordnet. Dieses Dichtelement befindet sich auf Höhe des inneren Trennsteges. Das eher flexible Material des Flachrohres erfährt dementsprechend im Bereich der freien Öffnung durch die Anschlusskappe eine Versteifung, sodass das Flachrohr einer Verpressung von außen aufgrund des Dichtelementes nicht ausweichen kann. Dadurch ist eine zuverlässige Abdichtung gewährleistet. Hierzu hat das Steuergehäuse eine Dichtaufnahme, welche zur Aufnahme des Dichtelementes angepasst ausgebildet ist.

Das Dichtelement ist vorzugsweise in der Dichtaufnahme elastisch vorgespannt gehalten und damit verpresst, sodass sich eine zuverlässige Abdichtung ergibt. Hierzu weist der den Leistungsteil aufnehmende Rahmen einen Stutzen auf, der das Flachrohr umgibt und zum Einbringen in die Dichtaufnahme angepasst ausgebildet ist. So kann der Stutzen das Dichtelement axial verpressen und in der Dichtaufnahme abdichten.

Gemäß einem weiteren Aspekt der vorliegenden Erfindung gibt diese einen Wärmedehnungsausgleichsbereich an, der durch das Kontaktblech ausgebildet und benachbart zu der Kontaktzunge vorgesehen ist. Dieser Wärmedehnungsausgleichsbereich kennzeichnet sich regelmäßig durch ein ausgestanztes Blechsegment des Kontaktblechs aus, dass sich nicht vollflächig zwischen der unmittelbaren Verbindung zwischen dem Kontaktblech und der Kontaktzunge erstreckt. Ein entsprechender Wärmedehnungsausgleichsbereich kann durch ein mäandrierend gebogenes Segment gebildet sein, welches durch Stanzen aus dem das Kontaktblech ausbildenden Material geformt ist. Bedeutsam für den Wärmedehnungsausgleichsbereich sind insbesondere zumindest zwei sich im Wesentlichen quer zu der Längserstreckung der Kontaktzunge erstreckende Stege, die durch Stanzen aus dem Material des Kontaktblechs herausgebildet sind und einteilig an dem Kontaktblech ausgeformt sind. Über einen gemeinsamen Verbindungsbereich können die beiden Stege aufeinander zu und voneinander weg flexen, wodurch eine gewisse Ausgleichsmöglichkeit gegeben ist, bei unterschiedlichen Erwärmungen innerhalb des Heizstabes eine Ausgleichsbewegung zu schaffen. So kann der an den PTC-Elementen anliegende Bereich des Kontaktblechs ortsfest an den Kontaktblechen verbleiben. Auch die Kontaktzunge kann in ihrer angeschlossenen Position fest verbleiben, auch wenn die elektrische Heizvorrichtung an- bzw. ausgeschaltet wird.

Eine zusätzliche Ausgleichsmöglichkeit kann dadurch geschaffen werden, dass sich die Kontaktzunge zwar parallel zu dem an dem PTC-Element anliegenden Bereich des Kontaktbleches erstreckt, jedoch versetzt dazu. Dies hat den weiteren Vorteil, dass die beiden Kontaktbleche zu einem Flachrohr einfach und sicher auf gleicher Höhe in der Anschlusskappe aufgenommen werden können.

Schließlich wird vorgeschlagen, das Kontaktblech mit einem Rasthaken zu versehen, der gegen einen durch die Anschlusskappe gebildeten Rastnocken verriegelt. Dieser Rasthaken erstreckt sich bevorzugt parallel zu dem Wärmedehnungsausgleichsbereich, sodass eine relativ kompakte Bauweise erhalten wird.

Die in den Ansprüchen 10 bis 12 angegebene Weiterbildung kann auch für sich erfindungswesentlich sein, d.h. in Verbindung mit einer Anschlusskappe zu einem Heizrohr einer elektrischen Heizvorrichtung mit den oberbegrifflichen Merkmalen von Anspruch 1 eine Erfindung definieren. Entsprechendes gilt für eine konventionelle Lösung mit einem Positionsrahmen, der zumindest ein PTC-Element in einer dazu vorgesehenen Ausnehmung aufnimmt und der regelmäßig beidseitig von den Kontaktblechen überragt und zwischen diesen aufgenommen ist, um das PTC-Element zu bestromen. Auch solche Kontaktbleche bilden üblicherweise einteilig daran ausgebildet die Kontaktzungen aus, wie dies beispielsweise aus DE 20 2011 003 209 U1 bzw. EP 2 772 375 A1 bekannt ist.

Weitere Einzelheiten und Vorteile der vorliegenden Erfindung ergeben sie aus in der nachfolgenden Beschreibung eines Ausführungsbeispiels in Verbindung mit der Zeichnung. In dieser zeigen:
- Fig. 1: eine perspektivische Seitendarstellung des Ausführungsbeispiels in Explosionsdarstellung;
- Fig. 2: eine perspektivische Seitenansicht eines Ausführungsbeispiels des Flachrohrs;
- Fig. 3: eine perspektivische vergrößerte Ansicht des Anschlussendes des Flachrohres nach Fig. 2;
- Fig. 4: eine perspektivische Draufsicht auf das Innere des Steuergehäusebodens;
- Fig. 5: eine Schnittansicht entlang der Linie V-V gemäß der Darstellung in Fig. 4;
- Fig. 6: eine Draufsicht auf ein Detail einer in dem Steuergehäuseboden vorgesehenen Leiterplatte;
- Fig. 7: eine Querschnittsdarstellung der in der Heizvorrichtung aufgenommenen Flachrohre im Bereich des Anschlussendes des Flachrohres;
- Fig. 8: eine perspektivische Seitenansicht des in Fig. 2 gezeigten Endes vor dem Fügen von Anschlusskappe und Kontaktzunge und
- Fig. 9: eine Draufsicht auf das Ausführungsbeispiel gemäß Fig. 8 nach dem Fügen.

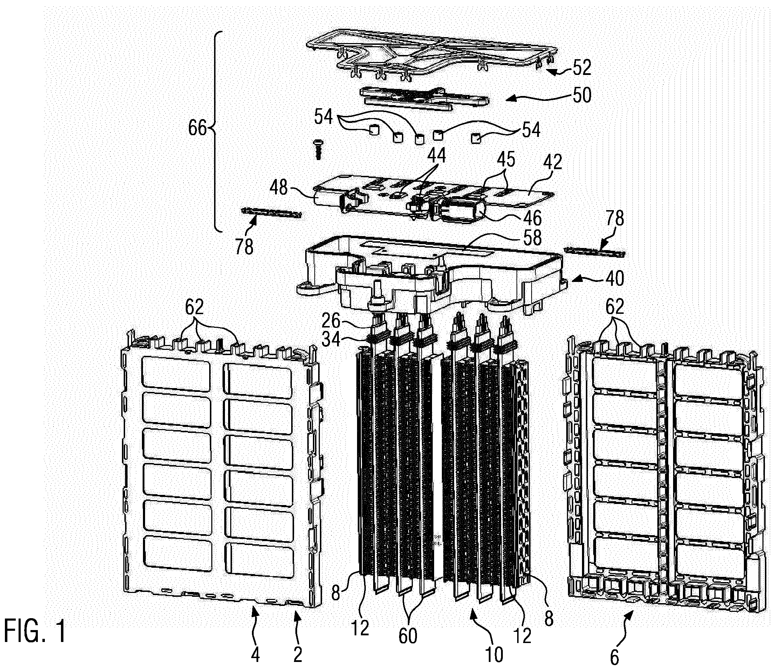

Die Fig. 1 zeigt die wesentlichen Komponenten des Ausführungsbeispiels einer elektrischen Heizvorrichtung, die einen aus Kunststoff gebildeten Rahmen 2 umfasst, der aus zwei Rahmenteilen 4, 6 gebildet ist. Der in Fig. 1 links dargestellte Rahmenteil 4 ist von seiner Außenfläche gezeigt. Der rechts dargestellte Rahmenteil 6 erlaubt einen Blick auf die innere Ausgestaltung des Rahmens. Im Bereich der Längsholme des Rahmenteils 6 befindet sich ein Federelement 8. Jedem Längsholm ist jeweils ein Federelement 8 zugeordnet. Das Federelement ist gemäß der Lehre von EP 2 298 582 A1 ausgebildet und hat einander gegenüberliegend vorgesehene Schiebesegmente, deren Relativbewegung zueinander zum Ausstellen der Segmente führt, sodass nach Schließen des Rahmens 2 eine Federkraft innerhalb des Rahmens erzeugt werden kann.

Der Innenraum des Rahmens 2 wird durch einen mit Bezugszeichen 10 gekennzeichneten Leistungsteil ausgefüllt. Der Leistungsteil 10 hat Wellrippenelemente 12, die an Flachrohren 14 anliegen. Die Wellrippenelemente 12 sind durch mäandrierend gebogene Blechstreifen ausgeformt, die unmittelbar an dem Flachrohr 14, konkret an einer Hauptseitenfläche 16 des Flachrohres 14 anliegen, und gegenüberliegend ein Streifenelement 18 aus einer Blechtafel kontaktieren. Über das Federelement 8 sind die jeweiligen Wellrippenelemente 12 unter Vorspannung gegen die zugeordneten Flachrohre 14 angelegt. Die Schichten der Leiterplatte 10 erstrecken sich parallel zu den Längsholmen des Rahmens 2.

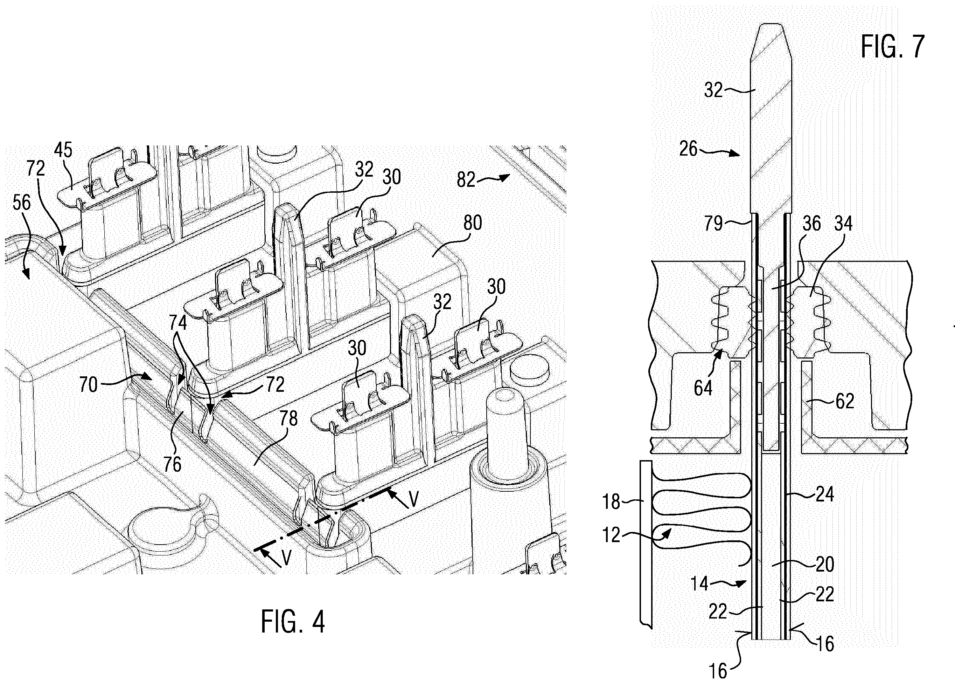

In jedem Flachrohr 14 befinden sich mehrere in Längsrichtung des Flachrohres 14 hintereinander vorgesehene PTC-Elemente 20, an denen Kontaktbleche 22 anliegen, die außenseitig jeweils mit einer Isolierung 24 versehen sind. Die Isolierung 24 ist vorwiegend durch mehrfaches Umwickeln der Kontaktbleche 22 mit einer Kapton-Folie (Polyimid) gebildet (vgl. Fig. 7).

Wie die Fig. 1-3 vermitteln, ist das Anschlussende jedes Flachrohres 14 mit einer Anschlusskappe 26 versehen, die als spritzgegossenes Kunststoffteil ausgebildet ist und Aufnahmen 28 zum Herausleiten von Kontaktzungen 30 aufweist. Diese Aufnahmen 28 führen in das Innere des Flachrohres 14. Die Kontaktzungen 30 sind durch Freischneiden der freien Enden der Kontaktbleche 22 ausgebildet. Vorliegend befinden sich die Kontaktbleche 22 zwischen Innenflächen der Flachrohre 14, die parallel zu den Hauptseitenflächen 16 gebildet sind. Die Kontaktzungen 30 befinden sich in etwa mittig relativ zu der Dicke des Flachrohres 14 und sind dementsprechend gegenüber den inneren Hauptseitenflächen des Flachroheres 14 nach innen versetzt vorgesehen. Zwischen den Kontaktzungen 30 befindet sich ein äußerer Trennsteg 32, der die Kontaktzungen 30 überragt. Das freie Ende des äußeren Trennsteges 32 ist konisch zulaufend ausgebildet. Der äußere Trennsteg 32 hat eine im Wesentlichen kreuzförmige Querschnittsfläche. Die dadurch gebildeten äußeren Rippen des äußeren Trennsteges 32 sind jeweils zu einer gemeinsamen Spitze des äußeren Trennsteges 32 abgeflacht.

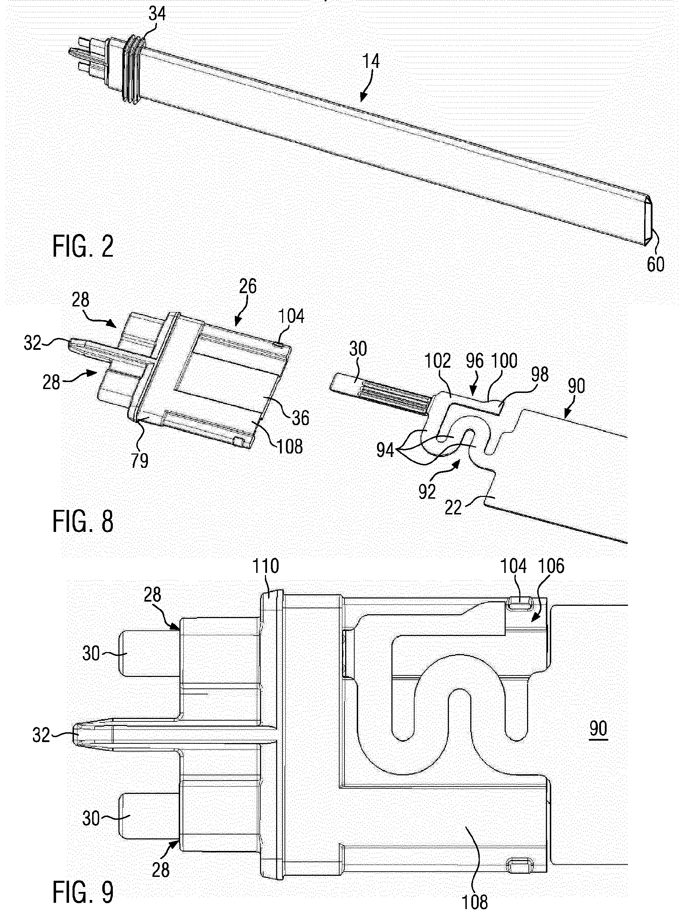

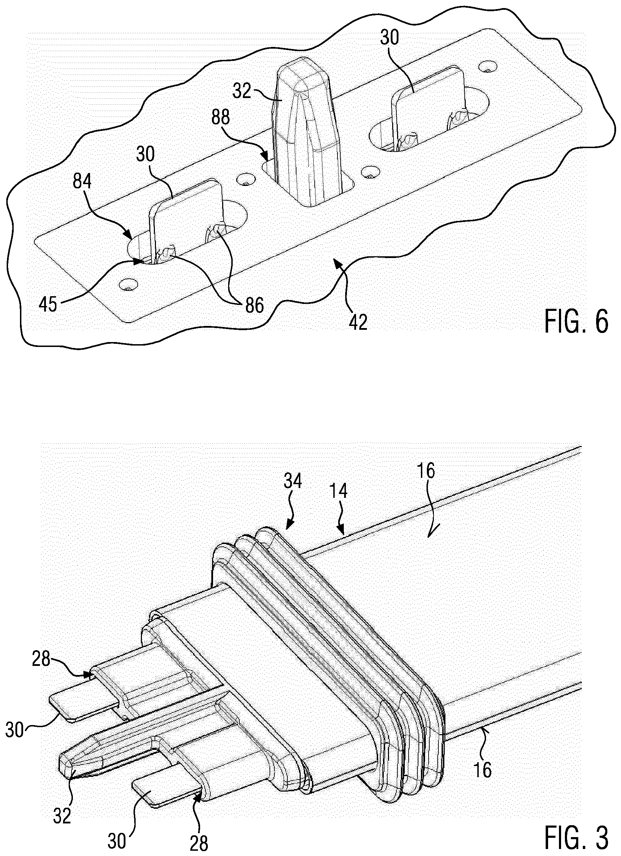

Die Fig. 2 und 3 lassen ferner ein Dichtelement 34 erkennen, welches auf das Flachrohr 14 aufgeschoben ist. Das Dichtelement 34 besteht aus TPE und ist als Labyrinthdichtung ausgeformt. Das Dichtelement 34 befindet sich auf Höhe eines in Fig. 7 erkennbaren inneren Trennsteges 36 der Anschlusskappe 26, der die Kontaktbleche 22 im Bereich des Anschlussendes voneinander beabstandet und bis zu dem ersten PTC-Element 20 reicht. Dieser innere Trennsteg 36 versteift zusammen mit der Isolierung 24 und den Kontaktblechen 22 das Anschlussende des Flachrohres 14, sodass sich keine erhebliche Verformung beim Anlegen des Dichtelements 34 an die Außenumfangsfläche des Flachrohres 14 ergibt. Dies begünstigt die Abdichtung.

In Fig. 1 ist mit Bezugszeichen 40 ein Steuergehäuseboden gekennzeichnet, der eine Steuerung in sich aufnimmt, die auf einer mit Bezugszeichen 42 gekennzeichneten Leiterplatte vorgesehen ist. Von den Bauelementen auf der Leiterplatte 42 sind lediglich Leistungstransistoren 44 zeichnerisch herausgehoben. Die Leiterplatte 42 kann an ihrer Ober- bzw. Unterseite mit weiblichen Kontaktelementen versehen sein, wie sie in EP 2 236 330 A1 beschrieben sind. Diese weiblichen Kontaktelemente sind mit Bezugszeichen 45 gekennzeichnet. Die Leiterplatte 42 weist ferner ein Steckergehäuse 46 für die Steuersignale und ein Steckergehäuse 48 für den Leistungsstrom auf. Diese Steckergehäuse 46, 48 sind formschlüssig in Aufnahmen des Steuergehäusebodens 40 aufgenommen.

Mit Bezugszeichen 50 ist eine Stützstruktur gezeigt, die sich gegen einen Steuergehäusedeckel 42 abstützt, um die Leistungstransistoren 44 über elastische Kompressionselemente 54 gegen Oberflächen von Kühlkörpern 56 anzulegen, die einteilig durch den metallischen Steuergehäuseboden 40 ausgeformt sind. Zur Vermeidung eines unmittelbaren elektrischen Kontaktes ist zwischen den Leistungstransistoren 44 und den Kühlkörpern 56 eine Kapton-Folie 58 vorgesehen.

Die Fig. 1 und 2 lassen an dem anderen Ende der Flachrohre 14 jeweils Endkappen 60 erkennen, die abgedichtet in das Flachrohr 14 eingesetzt sind, ähnlich den Anschlusskappen 26, und endseitig einen Formsteg aufweisen, der in Aufnahmen innerhalb der beiden Rahmenteile 4, 6 aufgenommen werden kann, um die jeweiligen Flachrohre 14 in vorbestimmter Weise zu positionieren. Auf der gegenüberliegenden Seite weist ein Querholm der Rahmenteile 4, 6 einteilig an dem Kunststoffrahmen 2 ausgebildeten Stutzen 62 auf. Auch hier wird durch jede Rahmenhälfte 4, 6 ein Teil des Stutzens 62 ausgebildet, sodass bei gefügtem Rahmen die Stutzen 62 vervollständigt sind.

Die Funktion dieser Stutzen 62 ergibt sich aus Fig. 7. Wie ersichtlich hat der Steuergehäuseboden 40 eine Dichtungsaufnahme 64, die sich zu dem Leistungsteil 10 hin öffnet und zur Aufnahme des Dichtelementes 34 angepasst ausgebildet ist. Nach dem Fügen von Leistungsteil 10 und einem Steuerteil, welches als Gehäuseteile den Steuergehäuseboden 40 und den Steuergehäusedeckel 52 umfasst und in Fig. 1 mit Bezugszeichen 66 gekennzeichnet ist, wird das Dichtelement 34 durch die Stirnseite des Stutzens 62 in der Dichtungsaufnahme 64 komprimiert, sodass sich eine solide Abdichtung ergibt.

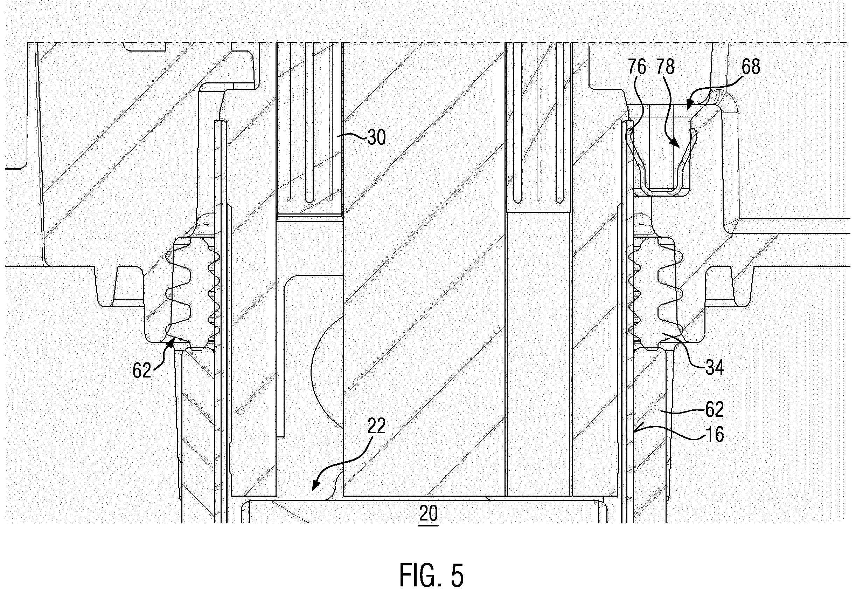

Jenseits dieser Abdichtung sind verschiedene Flachrohre 14 auf ein gemeinsames Potential gelegt. Hierzu ist in dem Steuergehäuseboden 40 eine Aufnahmenut 68 ausgespart, in die eine Kontaktfeder 70 eingepresst ist. Die Aufnahmenut 68 öffnet sich seitlich zu jeden der drei in Fig. 4 dargestellten Flachrohre 14 und hat hierzu die Aufnahmenut 68 durchbrechende Durchbrechungen 72. In jeder der Durchbrechungen 72 befindet sich ein durch Schlitze 74 abgeteilter Kontaktarm 76, der durch die Kontaktfeder 70 ausgebildet ist. Zwischen benachbarten Kontaktarmen 76 bildet die Kontaktfeder 70 Verriegelungssegmente 78 aus. In einem ungespannten Zustand ist die Breite der Kontaktfeder 70 größer als die Breite der Aufnahmenut 68. Die Kontaktfeder 70 wird dementsprechend in die Aufnahmenut 68 gedrängt, wodurch die Verriegelungssegmente 78 vorgespannt und die Kontaktfeder 70 in der Aufnahmenut 68 kraftschlüssig gegebenenfalls auch durch Verkrallen an dem Gehäuseboden 40 formschlüssig verbunden sind. Diese Gegebenheit ist Fig. 5 zu entnehmen. Die Figur zeigt auch, dass die Anschlusskappe 26 mit einem Anlagekragen 79 versehen ist, der stirnseitig gegen das Flachrohr 14 anliegt.

Die Fig. 4 lässt femer erkennen, dass der Steuergehäuseboden 40 Dachsegmente 80 ausbildet, gegen welche die Flachrohre 14 mit den Anschlusskappen 26 beim Einschieben der Flachrohre 14 in den Steuergehäuseboden 40 anschlagen. Dadurch ist die axiale Position der Flachrohre 14 vorgegeben. Das andere Ende der Flachrohre 14 liegt mit der zugeordneten Endkappe 60 in dem Querholm des Rahmens 2 fest.

Bei der Darstellung in Fig. 4 ist die Leiterplatte 42 aus Darstellungsgründen weg genommen. Dargestellt sind aber die Leistungstransistoren 44 und die diesen Leistungstransistoren zugeordneten Kompressionselemente 54, die Leistungstransistoren 44 gegen die Kühlkörper 56 unter Vorspannung anlegen, nachdem der Steuergehäusedeckel zur Vervollständigung eines Steuergehäuses 82 mit dem Steuergehäuseboden 40 gefügt worden ist. In Fig. 4 sind ferner die weiblichen Steckelementaufnahmen 45 wiedergegeben, die gemäß EP 2 236 330 A1 ausgebildet und mit Leiterbahnen der Leiterplatte 42 verbunden sind.

Die Fig. 6 zeigt einen perspektivischen Ausschnitt der Leiterplatte 42, die zur Aufnahme der Kontaktzungen 30 angepasst ausgebildete Kontaktzungenausnehmungen 84 hat. In diesen Kontaktzungenausnehmungen 84 liegen Kontaktarme 86 der weiblichen Steckelemente 45 frei, durch welche die Kontaktzungen 30 mit den Leiterbahnen der Leiterplatte 42 elektrisch kontaktiert sind. Mittig zwischen den Kontaktzungenausnehmungen 84 ist eine Trennstegausnehmung 88 gezeigt, die den äußeren Trennsteg 32 in sich auf nimmt und von diesem durchragt ist. Beim Fügen der Flachrohre 14 trifft zunächst der vorlaufende äußere Trennsteg 32 die Trennstegausnehmung 88. Aufgrund der konischen Spitze des äußeren Trennsteges 32 wird der Trennsteg 32 beim Vorschieben der Flachrohre 14 in der Trennstegausnehmung 88 mit wenig Spiel positioniert, wodurch auch die nachlaufenden Kontaktzungen 30 lagegenau zwischen die Kontaktarme 86 geführt werden.

Die Figuren 8 und 9 zeigen die Anschlusskappe 26 mit einem der zugeordneten Kontaktbleche 22. Dieses Kontaktblech 22 bildet einteilig die Kontaktzunge 30 aus. Zwischen der Kontaktzunge 30 und einem an den PTC-Elementen 20 anliegenden Bereich 90 des Kontaktblechs 22 befindet sich ein Wärmedehnungsausgleichsbereich 92, der durch ein mäandrierend gebogenes Segment gebildet ist, welches vorliegend drei sich parallel zueinander und im Wesentlichen rechtwinklig zu der Erstreckungsrichtung der Kontaktzunge 30 erstreckende Stege 94 umfasst, die miteinander verbunden sind. Hierdurch entsteht die Möglichkeit eines gewissen Ausgleichs von Wärmedehnungen aufgrund eines intermittierenden Betriebs der elektrischen Heizvorrichtung, ohne dass sich die Position der Kontaktzunge 30 bzw. des Bereiches 90 relativ zu den Kontaktblechen verändern muss. Dadurch wird das Risiko einer Reibkorrosion deutlich vermindert.

Parallel zu dem Wärmedehnungsausgleichsbereich 92 bildet das Material des Kontaktblechs 22 einen Rasthaken 96 aus, der sich parallel zu der Haupterstreckungsrichtung des länglichen Kontaktblechs 22 erstreckt und ein verdicktes Ende 98 ausbildet, welches über eine Rastrampe 100 in einen länglichen Stegbereich 102 des Rasthaken 96 übergeht. Beim Einschieben der Kontaktzunge 30 in die Aufnahme 28 der Anschlusskappe 26 gleitet ein mit Bezugszeichen 104 gekennzeichneter Rastnocken, der einteilig durch die Anschlusskappe 26 ausgebildet wird, zunächst an einer Außenfläche des Stegbereiches 102 vorbei. Der Rastnocken 104 trifft schließlich auf die Rastrampe 100, sodass der Rasthaken 96 nach innen elastisch gebogen wird und schließlich nach Vorbeigleiten an dem Rastnocken 104 elastisch zurückgestellt wird, sodass das verdickte Ende 98 hinter dem Rastnocken 104 verriegelt ist (vgl. Figur 9).

Wie Fig. 9 verdeutlicht, liegt der Wärmedehnungsausgleichsbereich 92 innerhalb der Anschlusskappe 26, die hierfür eine Vertiefung 106 ausformt, die einseitig von einem erhabenen Anlagesteg 108 begrenzt ist. Die in Fig. 9 gezeigte Ausgestaltung wird vor dem Einschieben in das Flachrohr 14 mit einer Kaptonfolie umwickelt, die bis zu einem Flansch 110 reicht, der den Anlagekragen 79 ausformt.

### Bezugszeichenliste

- 2: Rahmen
- 4: Rahmenteil
- 6: Rahmenteil
- 8: Federelement
- 10.: Leistungsteil
- 12: Wellrippenelement
- 14: Flachrohr
- 16: Hauptseitenfläche des Flachrohres
- 18: Streifenelement
- 20: PTC-Element
- 22: Kontaktblech
- 24: Isolierung
- 26: Anschlusskappe
- 28: Aufnahme
- 30: Kontaktzunge
- 32: äußerer Trennsteg
- 34: Dichtelement
- 36: innerer Trennsteg
- 40: Steuergehäuseboden
- 42: Leiterplatte
- 44: Leistungstransistor
- 45: weibliche Steckelementaufnahmen
- 46: Steckergehäuse für die Steuersignale
- 48: Steckergehäuse für den Leistungsstrom
- 50: Stützstruktur
- 52: Steuergehäusedeckel
- 54: Kompressionselement
- 56: Kühlkörper
- 58: Kapton-Folie
- 60: Endkappe
- 62: Stutzen
- 64: Dichtungsaufnahme
- 66: Steuerteil
- 68: Aufnahmenut
- 70: Kontaktfeder
- 72: Durchbrechung
- 74: Schlitz
- 76: Kontaktarm
- 78: Verriegelungssegment
- 79: Anlagekragen
- 80: Dachsegment
- 82: Steuergehäuse
- 84: Kontaktzungenausnehmung
- 86: Kontaktarm
- 88: Trennstegausnehmung
- 90: an dem PTC-Element anliegender Bereich des Kontaktblechs
- 92: Wärmedehnungsausgleichsbereich
- 94: Steg
- 96: Rasthaken
- 98: verdicktes Ende
- 100: Rastrampe
- 102: Stegbereich
- 104: Rastnocken
- 106: Vertiefung
- 108: Anlagesteg
- 110: Flansch

## Patentansprüche

1. Elektrische Heizvorrichtung mit einem Rahmen (2), in dem ein Leistungsteil (10) angeordnet ist, das Wellrippenelemente (12) und wärmeerzeugende Elemente aufweist, die jeweils zumindest ein zwischen Kontaktblechen (22) angeordnetes PTC-Element (20) umfassen, das außenseitig von einer Isolierung (24) abgedeckt und in einem Flachrohr (14) aufgenommen ist, wobei die Wellrippenelemente (12) an der Außenseite der Flachrohre (14) anliegen, **dadurch gekennzeichnet, dass** mehrere Flachrohre (14) an ihrer Anschlussseite abgedichtet durch ein Steuergehäuse (82) hindurchgeführt sind und dass in dem Steuergehäuse (82) ein Leiterelement (70) vorgesehen ist, das mehrere Flachrohre (14) elektrisch miteinander verbindet.

2. Elektrische Heizvorrichtung nach Anspruch 1, **dadurch gekennzeichnet, dass** mehrere Flachrohre (14) über eine gemeinsame, an dem Außenumfang der Flachrohre (14) unter Vorspannung anliegende Kontaktfeder (70) elektrisch miteinander verbunden sind, die in dem Steuergehäuse (82) gehalten ist.

3. Elektrische Heizvorrichtung nach Anspruch 2, **dadurch gekennzeichnet, dass** die Kontaktfeder (70) durch ein längliches Blechstück gebildet ist, das in eine Aufnahmenut (68) des Steuergehäuses (82) eingesetzt ist und zumindest ein mit dem Steuergehäuse zur Festlegung der Kontaktfeder (70) zusammenwirkendes Verriegelungssegment (78) und davon durch Schlitze (74) getrennte Kontaktarme (76) ausbildet, die außenumfänglich gegen die Flachrohre (14) anliegen.

4. Elektrische Heizvorrichtung nach einem der vorherigen Ansprüche, **gekennzeichnet durch** eine an der Anschlussseite in das Flachrohr (14) eingesetzte Anschlusskappe (26), die Aufnahmen (28) zum Herausleiten von Kontaktzungen (30) und einen äußeren Trennsteg (32) ausbildet, der zwischen den beiden Kontaktzungen (30) vorgesehen ist.

5. Elektrische Heizvorrichtung nach Anspruch 4, **dadurch gekennzeichnet, dass** die Anschlusskappe (26) einen inneren Trennsteg (36) ausbildet, der in das Flachrohr (14) eingesetzt ist und die beiden Kontaktbleche (22) im Bereich einer Mündung des Flachrohres (14) voneinander trennt.

6. Elektrische Heizvorrichtung nach Anspruch 4 oder 5, **dadurch gekennzeichnet, dass** die Anschlusskappe (26) abgedichtet in des Flachrohr (14) eingesetzt ist.

7. Elektrische Heizvorrichtung nach einem der Ansprüche 4 bis 6, **dadurch gekennzeichnet, dass** der äußere Trennsteg (32) die Kontaktzungen (30) überragt und konisch zulaufend ausgebildet ist und dass die Kontaktzungen (30) jeweils in einer in einer Leiterplatte (42) ausgesparten Kontaktzungenausnehmung (84) und der äußere Trennsteg (32) in einer in der Leiterplatte (42) ausgesparten Trennstegausnehmung (88) aufgenommen sind, wobei die Kontaktzungen (30) in der zugeordneten Kontaktzungenausnehmung (88) elektrisch mit den Leiterbahnen der Leiterplatte (42) kontaktiert sind und das Flachrohr (14) durch Zusammenwirken von äußerem Trennsteg (32) und Trennstegausnehmung (88) relativ zu der Leiterplatte (42) positioniert ist.

8. Elektrische Heizvorrichtung nach einem der Ansprüche 4 bis 7, **gekennzeichnet durch** ein auf der Außenumfangsfläche des Flachrohres (14) angeordnetes Dichtelement (34), das den inneren Trennsteg (36) umfänglich umgibt und dichtend in eine durch das Steuergehäuse (82) ausgebildete Dichtungsaufnahme (64) eingesetzt ist.

9. Elektrische Heizvorrichtung nach Anspruch 8, **dadurch gekennzeichnet, dass** der den Leistungsteil aufnehmende Rahmen (2) einen das zugeordnete Flachrohr (14) endseitig umgebenden Stutzen (62) ausbildet, der mit seiner Endfläche gegen das Dichtelement (34) anliegt.

10. Elektrische Heizvorrichtung nach einem der vorherigen Ansprüche, **dadurch gekennzeichnet, dass** benachbart zu einer von dem Kontaktblech (22) ausgebildeten Kontaktzunge (30) durch das Kontaktblech (22) ein Wärmedehnungsausgleichsbereich (92) ausgebildet ist.

11. Elektrische Heizvorrichtung nach Anspruch 10, **dadurch gekennzeichnet, dass** die Kontaktzunge (30) sich parallel zu einer einen an dem PTC-Element (20) anliegenden Bereich des Kontaktblechs (22) enthaltenden Ebene und dazu versetzt erstreckt.

12. Elektrische Heizvorrichtung nach einem der Ansprüche 4 bis 11, **dadurch gekennzeichnet, dass** das Kontaktblech (22) einen Rasthaken (96) ausbildet, der gegen einen durch eine Anschlusskappe (26) gebildeten Rastnocken (104) verriegelt ist.

## Claims

1. An electric heating device having a frame (2) in which a power part (10) is arranged which includes corrugated rib elements (12) and heat-generating elements which each comprise at least one PTC element (20) arranged between contact plates (22) which is covered on the outside by an insulation (24) and is accommodated in a flat tube (14), the corrugated rib elements (12) bearing against the outside of the flat tubes (14), **characterized in that** a plurality of flat tubes (14) are led sealingly through a control housing (82) on their connection side, and **in that** a conductor element (70) electrically interconnecting a plurality of flat tubes (14) is provided in the control housing (82).

2. The electric heating device according to claim 1, **characterized in that** a plurality of flat tubes (14) are electrically interconnected via a common contact spring (70) which is held in the control housing (82) and is biased to bear against the outer circumference of the flat tubes (14).

3. The electric heating device according to claim 2, **characterized in that** the contact spring (70) is formed by an elongated sheet metal piece which is inserted into a receiving groove (68) of the control housing (82) and defines at least one locking segment (78) cooperating with the control housing for fixing the contact spring (70) and contact arms (76) separated therefrom by slots (74) and abutting against the outer circumference of the flat tubes (14).

4. The electric heating device according to one of the preceding claims, **characterized by** a termination cap (26) inserted into the flat tube (14) at the connection side which defines receptacles (28) for guiding out contact tongues (30) and an outer separating web (32) provided between the two contact tongues (30).

5. The electric heating device according to claim 4, **characterized in that** the termination cap (26) defines an inner separating web (36) which is inserted into the flat tube (14) and separates the two contact plates (22) from each other in the region of a mouth of the flat tube (14).

6. The electric heating device according to claims 4 or 5, **characterized in that** the termination cap (26) is sealingly inserted into the flat tube (14).

7. The electric heating device according to any one of claims 4 to 6, **characterized in that** the outer separating web (32) projects beyond the contact tongues (30) and is tapered, and **in that** the contact tongues (30) are each received in a contact tongue recess (84) recessed in a printed circuit board (42) and the outer separating web (32) is received in a separating web recess (88) recessed in the printed circuit board (42), wherein the contact tongues (30) in the associated contact tongue recess (88) are in electric contact with the conductive tracks of the printed circuit board (42) and wherein the outer separating web (32) and the separating web recess (88) cooperate to position the flat tube (14) relative to the printed circuit board (42).

8. The electric heating device according to any one of claims 4 to 7, **characterized by** a sealing member (34) arranged on the outer circumferential surface of the flat tube (14) surrounding the circumference of the inner separating web (36) and being sealingly inserted into a sealing receptacle (64) defined by the control housing (82).

9. The electric heating device according to claim 8, **characterized in that** the frame (2) accommodating the power part defines a socket (62) surrounding the end side of the associated flat tube (14) and bearing against the sealing element (34) with its end face.

10. The electric heating device according to any one of the preceding claims, **characterized in that** a region (92) compensating for thermal expansion is defined by the contact plate (22) adjacent to a contact tongue (30) formed by the contact plate (22).

11. The electric heating device according to claim 10, **characterized in that** the contact tongue (30) extends parallel to and offset from a plane including a region of the contact plate (22) abutting against the PTC element (20).

12. The electric heating device according to any one of claims 4 to 11, **characterized in that** the contact plate (22) defines a latching tongue (96) latching on a latching nose (104) formed by a termination cap (26).

## Revendications

1. Dispositif de chauffage électrique comprenant un cadre (2) dans lequel est disposée une partie de puissance (10) qui présente des éléments de nervures ondulées (12) et des éléments générateurs de chaleur qui comprennent chacun au moins un élément CTP (20) agencé entre deux plaques de contact (22), qui est recouvert à l'extérieur par un isolant (24) et qui est logé dans un tube plat (14), les éléments de nervures ondulées (12) étant en appui contre le côté extérieur des tubes plats (14), **caractérisé en ce que** plusieurs tubes plats (14) sont passés de manière étanche à travers un boîtier de commande (82) sur leur côté de connexion, et **en ce qu'**un élément conducteur (70) qui connecté électriquement plusieurs tubes plats (14) les uns aux autres est prévu dans le boîtier de commande (82).

2. Dispositif de chauffage électrique selon la revendication 1, **caractérisé en ce que** plusieurs tubes plats (14) sont connectés électriquement les uns aux autres par l'intermédiaire d'un ressort de contact commun (70) qui s'applique sous précontrainte contre la périphérie extérieure des tubes plats (14) et qui est maintenu dans le boîtier de commande (82).

3. Dispositif de chauffage électrique selon la revendication 2, **caractérisé en ce que** le ressort de contact (70) est formé par une pièce de tôle allongée qui est installée dans une rainure de réception (68) du boîtier de commande (82) et forme au moins un segment de verrouillage (78) qui coopère avec le boîtier de commande pour fixer le ressort de contact (70), et par des bras de contact (76) qui en sont séparés par des fentes (74) et qui s'appliquent sur la périphérie extérieure contre les tubes plats (14).

4. Dispositif de chauffage électrique selon l'une quelconque des revendications précédentes, **caractérisé par** un capuchon de raccordement (26) installé dans le tube plat (14) du côté du raccordement et qui forme des logements (28) pour la sortie de languettes de contact (30) et une nervure de séparation extérieure (32), qui est prévu entre les deux languettes de contact (30).

5. Dispositif de chauffage électrique selon la revendication 4, **caractérisé en ce que** le capuchon de raccordement (26) forme une barrette de séparation intérieure (36) qui est installée dans le tube plat (14) et qui sépare les deux plaques de contact (22) l'une de l'autre dans la zone d'une ouverture du tube plat (14).

6. Dispositif de chauffage électrique selon la revendication 4 ou 5, **caractérisé en ce que** le capuchon de raccordement (26) est inséré de manière étanche dans le tube plat (14).

7. Dispositif de chauffage électrique selon l'une quelconque des revendications 4 à 6, **caractérisé en ce que** la barrette de séparation extérieure (32) fait saillie à partir des languettes de contact (30) et est réalisée de forme conique, et **en ce que** les languettes de contact (30) sont logées respectivement dans un évidement de languette de contact (84) découpé dans une carte de circuits imprimés (42), et la barrette de séparation extérieure (32) est logée dans un évidement de barrette de séparation (88) découpé dans la carte de circuits imprimés (42), les languettes de contact (30) dans l'évidement de languette de contact (88) associé venant un contact électrique avec les pistes conductrices de la carte de circuits imprimés (42), et le tube plat (14) étant positionné par rapport à la carte de circuits imprimés (42) par coopération de la barrette de séparation extérieure (32) et de l'évidement de barrette de séparation (88).

8. Dispositif de chauffage électrique selon l'une des revendications 4 à 7, **caractérisé par** un élément d'étanchéité (34) agencé sur la surface périphérique extérieure du tube plat (14), qui entoure la barrette de séparation intérieure (36) circonférentiellement et qui est installé de manière étanche dans un logement d'étanchéité (64) formé par le boîtier de commande (82).

9. Dispositif de chauffage électrique selon la revendication 8, **caractérisé en ce que** le cadre (2) recevant la partie de puissance forme une pièce de raccordement (62) qui entoure le tube plat associé (14) à son extrémité et prend appui par sa surface d'extrémité contre l'élément d'étanchéité (34).

10. Dispositif de chauffage électrique selon l'une quelconque des revendications précédentes, **caractérisé en ce qu'**une zone de compensation de dilatation thermique (92) est formée par la plaque de contact (22) au voisinage d'une languette de contact (30) formée par la plaque de contact (22).

11. Dispositif de chauffage électrique selon la revendication 10, **caractérisé en ce que** la languette de contact (30) s'étend parallèlement à un plan contenant une zone de la plaque de contact (22) en appui contre l'élément PTC (20) et décalée par rapport à celui-ci.

12. Dispositif de chauffage électrique selon l'une quelconque des revendications 4 à 11, **caractérisé en ce que** la plaque de contact (22) forme un crochet d'encliquetage (96) qui est bloqué contre une came d'encliquetage (104) formée par un capuchon de raccordement (26).
